Europäisches Patentamt

European Patent Office

Office européen des brevets

(11) Publication number: **0 488 529 A1**

# EUROPEAN PATENT APPLICATION

(21) Application number: **91309989.1**

(22) Date of filing: **29.10.91**

(51) Int. Cl.5: **B60T 11/32**, B60T 17/22

(30) Priority: **26.11.90 GB 9025638**

(43) Date of publication of application:
**03.06.92 Bulletin 92/23**

(84) Designated Contracting States:
**BE DE ES FR IT SE**

(71) Applicant: **WESTINGHOUSE BRAKE AND SIGNAL HOLDINGS LIMITED**
**Pew Hill**
**Chippenham Wiltshire(GB)**

(72) Inventor: **Langley, Keith William**
**11 Bennetts Road, Swainswick**
**Bath, Avon(GB)**

(74) Representative: **MacFarlane, John Anthony Christopher et al**
**Page Hargrave Temple Gate House Temple Gate**
**Bristol BS1 6PL(GB)**

(54) **Valve arrangements.**

(57) A valve arrangement comprises an inlet port (5), an outlet port (6), a valve member (9) normally adopting a valve arrangement open position in which fluid flow from the inlet port (5) to the outlet port (6) is permitted via a choke (8), and a fluid chamber (2). The inlet port (5) is connected via another choke (7) to supply fluid to the fluid chamber (2) to urge the valve member (9) to a valve arrangement closed position. The two chokes (7 and 8) determine that upon flow of fluid from the inlet port (5) to the outlet port (6) the fluid pressure in the fluid chamber (2) tends to rise more slowly than the fluid pressure at the outlet port (6) and so the valve member (9) is urged to remain in the valve arrangement open position by the effect of the fluid pressure at the outlet port (6). If this fluid pressure is insufficient, either because of an existing rupture downstream of the valve arrangement or because such a rupture occurs, the fluid pressure in the fluid chamber (2) asserts itself to move the valve member (9) to the valve arrangement closed position.

This invention relates to valve arrangements for automatically affecting flow of fluid in a fluid flow line in the event of change in pressure of the fluid flowing in the line. The invention is particularly concerned with such arrangements for use in the pneumatic brake lines of multiple-unit vehicle air brake systems.

In a typical multiple-unit vehicle air brake system there are included in the pneumatic brake lines to the individual braked bogies, so-called "hose protection chokes". If a brake line ruptures downstream of any one of these chokes, the resulting escape of air is limited to that permitted by the size of the choke orifice. This orifice must, of course, be sufficiently large to allow, in normal circumstances, sufficient air flow to achieve braking. However, the loss of air permitted by such a relatively large-orificed choke in the event of rupture may be too high for satisfactory operation of the remainder of the system. This is particularly so if the number of units is small, say two or three, or indeed if a brake system is that of a single vehicle.

According to the present invention there is provided a valve arrangement comprising an inlet port, an outlet port, a valve member normally adopting a valve arrangement open position in which fluid flow from the inlet port to the outlet port is permitted, and a fluid chamber, fluid pressure in this chamber being effective for urging the valve member to a valve arrangement closed position, the inlet port being connected to supply fluid to the fluid chamber and, in the valve arrangement open position of the valve member, to the outlet port via a choke arrangement determining that upon flow of fluid from the inlet port to the outlet port the fluid pressure in the fluid chamber tends to rise more slowly than the fluid pressure at the outlet port, the valve member being urged to remain in the valve arrangement open position by the effect of the fluid pressure at the outlet port whereby if the fluid pressure at the outlet port is insufficiently high the fluid pressure in the fluid chamber asserts itself to move the valve member to the valve arrangement closed position.

In use in a fluid flow line with the inlet port connected to a source of fluid pressure to be supplied to the inlet port, this valve arrangement operates automatically to close in the event of sufficient loss of pressure at the outlet port so that if, for example, the flow line is part of a vehicle air brake system, the system upstream of the valve arrangement is protected from the effects of a rupture downstream of the arrangement.

The valve arrangement when closed can either close completely the communication between the inlet and outlet ports, or if desired the valve arrangement can include a bleed line permitting fluid bleed past the valve member in the valve arrangement closed position, sufficient to give an indication that the closed position has been reached but insufficient significantly to reduce the protection given by the closed valve arrangement.

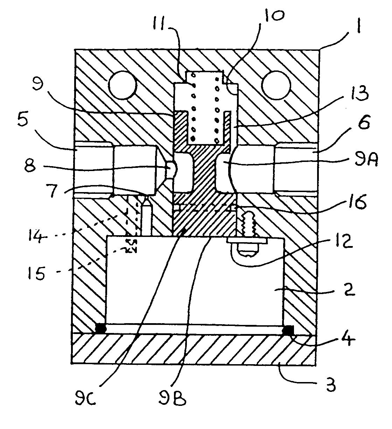

For a better understanding of the invention and to show how the same may be carried into effect reference will now be made, by way of example, to the accompanying drawing, in which the single Figure is a sectional side view of a valve arrangement.

The valve arrangement shown in the Figure has a body 1 in which there is a fluid chamber 2 closed by an end cap 3 acting on a sealing ring 4, and tapped co-axial inlet and outlet ports 5 and 6. The inlet port 5 is in communication with the chamber 2 via a first choke 7.

In the open condition of the valve arrangement illustrated the inlet port 5 is in communication with the outlet port 6 via a second choke 8 at the inner end of the port 5, downstream of the first choke 7, and a groove 9A in a valve member 9.

The valve member 9 is slidable in a bore 10 which is transverse of the ports 5 and 6 and opens into the chamber 2. A spring 11 acts to hold the valve member 9 in the open position, against a stop 12, with the inner face 9B of the valve member 9 exposed to the chamber 2.

In normal operation with, for example, the inlet port 5 connected to an air pressure supply and the outlet port 6 connected to operate the brakes on a vehicle bogie, upon such operation air flows from port 5 to port 6 via second choke 8 and groove 9A. Air also flows via first choke 7 into chamber 2 to apply pressure to the inner face 9B of the valve member 9. The relative sizes of the chokes 7 and 8 are selected to ensure that the pressure in the chamber 2 rises more slowly than the pressure at the outlet port 6. The part of the bore 10 housing the spring 11 is open to the outlet port 6 via a passage 13 defined by a flat on the valve member 9 and the pressure at the outlet port 6 acts, with the spring 11, on the valve member 9 in the sense to oppose the action thereon of the pressure in the chamber 2 and the valve member 9 is held in the illustrated open position. However, if there is a rupture downstream of the outlet port 6 so that the pressure in the outlet port 6 does not increase sufficiently to overcome the action on the valve member 9 of the rising pressure in the chamber 2, or, upon a rupture occurring, drops off so as to cease to overcome the chamber 2 pressure, the pressure in the chamber 2 moves the valve member 9 against the action of the spring 11 so that a full diameter portion 9C of the valve member 9 closes the communication between the ports 5 and 6. In this closed condition, therefore, the port 5 is closed at the valve arrangement.

With the valve member 9 in the illustrated open position, upon reduction of air pressure at the inlet port 5 air will flow from the outlet port 6 to the inlet port 5 and air will also evacuate from the chamber 2 via the choke 7. If necessary there can be provided, as shown by dotted lines in the Figure, a bypass 14, by passing the choke 7, connecting the chamber 2 with the inlet port 5 and including a check valve 15 allowing flow only in the direction from the chamber 2 to the port 5. This bypass would be sized to achieve a sufficiently quick flow of air from the chamber 2 to the port 5 to ensure that the valve member 9 does not move to the closed position.

Also shown in the Figure is an annular groove 16 in the full diameter portion 9C of the valve member 9. This groove 16 is provided, if so desired, as a bleed line to give a small leakage of fluid from the port 5 in the valve arrangement closed condition, sufficient to give an indication that the closed condition has been reached, but insufficient significantly to reduce the effect of the valve arrangement closing.

It will be appreciated that if incorporated in the pneumatic brake line to an individual braked bogie of a vehicle air brake system, the valve arrangement described will close, upon (or during) operation of the brakes of the bogie, if there is a rupture in the system downstream of the valve arrangement (or if a rupture occurs) thereby to protect the system upstream of the valve arrangement from the effects of the rupture.

## Claims

1. A valve arrangement comprising an inlet port (5), an outlet port (6), a valve member (9) normally adopting a valve arrangement open position in which fluid flow from the inlet port (5) to the outlet port (6) is permitted, and a fluid chamber (2), fluid pressure in this chamber (2) being effective for urging the valve member (9) to a valve arrangement closed position, the inlet port (5) being connected to supply fluid to the fluid chamber (2) and, in the valve arrangement open position of the valve member, to the outlet port (6) via a choke arrangement (7/8) determining that upon flow of fluid from the inlet port (5) to the outlet port (6) the fluid pressure in the fluid chamber (2) tends to rise more slowly than the fluid pressure at the outlet port (6), the valve member (9) being urged to remain in the valve arrangement open position by the effect of the fluid pressure at the outlet port (6) whereby if the fluid pressure at the outlet port (6) is insufficiently high the fluid pressure in the fluid chamber (2) asserts itself to move the valve member (9) to the valve arrangement closed position.

2. A valve arrangement as claimed in claim 1, wherein in its valve arrangement closed position the valve member (9) closes completely communication between the inlet port (5) and the outlet port (6).

3. A valve arrangement as claimed in claim 1 and comprising a bleed line (16) permitting fluid bleed past the valve member (9) in the valve arrangement closed position.

4. A valve arrangement as claimed in claim 1, 2 or 3 and comprising a bypass (14), by passing the choke arrangement (7/8), connecting the fluid chamber (2) with the inlet port (6), this bypass (14) including a check valve (15) allowing fluid to flow only in the direction from the fluid chamber (2) to the inlet port (5).

5. A valve arrangement as claimed in claim 1, 2, 3 or 4, wherein the choke arrangement (7/8) comprises a first choke (7) through which the inlet port (5) is connected to the fluid chamber (2) and a second choke (8) through which the inlet port (5) is open to the outlet port (6).

6. A valve arrangement as claimed in any one of the preceding claims, wherein the valve member (2) is biased by resilient means (11) to its valve arrangement open position.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-1 136 879 (PETITDIDIER)<br>* page 2, right column, paragraph 4 - page 3, right column, paragraph 3; figures 1,2 *<br>--- | 1 | B60T11/32<br>B60T17/22 |
| A | FR-A-2 433 146 (WABCO)<br>* the whole document *<br>--- | 1 | |
| A | DE-A-2 040 450 (TEVES)<br>* page 3, paragraph 2 - page 4, paragraph 1; figure 1 *<br>----- | 1 | |
| | | | TECHNICAL FIELDS SEARCHED (Int. Cl.5)<br><br>B60T |

The present search report has been drawn up for all claims

| Place of search | Date of completion of the search | Examiner |
|---|---|---|
| BERLIN | 21 FEBRUARY 1992 | BLURTON M.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)